# EUROPEAN PATENT APPLICATION

(11) **EP 0 732 131 A1**
(43) Date of publication of application: **18.09.1996**
(21) Application number: 95932215.7
(22) Date of filing: 22.09.1995
(51) Int. Cl.: A63F 9/22

(54) **STEERING LOADING DEVICE**

(30) Priority: 22.09.1994 JP 228393/94; 29.11.1994 JP 294362/94
(71) Applicant: DAIKIN INDUSTRIES, LTD., Kita-ku, Osaka 530 (JP)
(72) Inventor: TANI, Nobuyuki, 1-1, Nishihitotsuya Settsu-shi Osaka 566 (JP)
(74) Representative: Ritter und Edler von Fischern, Bernhard, Dipl.-Ing.
(86) International application number: JP9501919
(87) International publication number: WO9609101

(57) **Abstract**

A steering loading device is provided which has a simple construction, operability which is as good as when driving a real vehicle and superior reliability and durability. The device comprises a hydraulic pump (P) which is driven by an electric motor (M) for sucking up oil in a tank (T), a hydraulic rotary device (6) having a forward rotation port (61) and a reverse rotation port (62) which are caused to communicate with said hydraulic pump (P) and adapted to perform a hydraulic motor action by virtue of pressurizing force from said hydraulic pump (P) and a hydraulic pump action by virtue of external driving force from a steering wheel (11), and first and second solenoid proportional pressure reducing valves (31, 32) each having a pump port (41) communicating with said hydraulic pump (P), a pressure reducing port (42) for causing said pump port (41) to communicate with said forward rotation port (61) and reverse rotation port (62) of said hydraulic rotary device (6) when an electric command is given and a tank port (43) for causing said pressure reducing port (42) to communicate with said tank (T) when no electric command is given and provided along first and second lines (21, 22), respectively.

## Description

### TECHNICAL FIELD

The present invention relates to steering load apparatuses for use in driving game machines or others in which vehicle image and non-vehicle image on a display screen will be changed by rotational operation of a steering wheel. More specifically, the invention relates to a steering load apparatus which allows the steering wheel to be handled with a feeling as if you were actually driving, by giving a steering shaft, when it is handled, a load similar to that in actually driving a vehicle.

### BACKGROUND ART

For driving game machines or others that allow the driving of vehicles to be simulated and experienced, it is preferable that the force that would be felt when you drive a real vehicle is simulatively reproduced as much as possible so that the differences from the actuality are eliminated and a realistic feeling is presented, until the game can be enjoyed through the driving operation with the substantially same feeling as it is actually.

In more detail, during the driving of actual vehicles, it will happen that the steering wheel feels heavier or lighter depending on the state of driving, that the reaction forces of irregularities of the road surface are transferred to come up, or that when the steering wheel go out of touch, the steering wheel turns by itself so as to recover the straight running state due to the straight running property of the vehicle. Therefore, it is preferable to simulatively reproduce such forces to be transferred to the steering wheel, and thereby to implement a simulated driving as close to the actual vehicle as possible.

The implementation of such simulated driving of vehicles in game systems has conventionally been attempted as described, for example, in Japanese Patent Laid-Open Publication HEI 4-92691.

In the example described in this publication, as shown in Fig. 10, one end of a steering shaft B is connected to a steering wheel A. While the steering shaft B is rotatably held by a bearing C, a first pulley D is secured to the other end of the steering shaft B.

A reversible electric motor E that can be switched in rotational direction is further provided. Between a second pulley G mounted to the rotary shaft F of the motor E and the first pulley D, a belt H is stretched over. Thus, the steering shaft B is driven by the drive of the motor E via the belt H.

The drive of the motor E is executed by controlling the direction and amount of drive of the motor E based on detection results of the amount of rotation of the steering wheel A. When the steering wheel A is rotated by manual handling, the motor E is so driven as to rotate in a direction reverse to the rotational direction of the manual handling, by which a load is applied during the handling of the steering wheel A. When the steering wheel A goes out of touch, the steering wheel A is automatically rotated so as to return to the neutral position so that it recovers by itself to the straight running state.

However, conventionally, the rotation drive of the steering wheel A is implemented by the rotation drive of the electric motor E. Still, because the steering wheel A is normally at rest or kept rotating at low speed, the electric motor E is largely burdened. As a result, a large current flows through the electric motor E, making a cause of poor efficiency as well as, in the worst case, a possibility that the coil may burn out.

When the steering wheel A is rotated to a slight extent at quite a low speed in the straight running state, driving the motor E in correspondence would result in too small a rotational angle to exert the function as a motor. In such a case, it is difficult to apply a load to the steering wheel A, for a problem.

The steering wheel A permits the direction of torque to be changed. To successfully cope with this change in the direction of rotation, it is necessary to rapidly change the direction of rotation. However, the electric motor E is slow in reaction due to the inertia mass of the motor, such that a bad feeling results and that high-speed switching could not be accomplished, for a further problem.

When the steering wheel A is loaded by the drive of the electric motor E, the torque that applies to the steering wheel A will not change depending on the speed at which the steering wheel A is handled. Therefore, when the steering wheel A has undergone a rapid handling, the resistance torque, that is, the load applied to the steering wheel A will not increase such that a feeling similar to that in actually driving a vehicle could hardly be reproduced, for still another problem.

Furthermore, when steering wheel A needs to be locked upon a collision of the vehicle or other events, there has been the case that the lock of the steering wheel A would not be implemented conventionally, for a yet further problem.

### DISCLOSURE OF THE INVENTION

Accordingly, it is an object of the present invention to provide a steering load apparatus which is simple in construction, so good at operability as if you were driving a real car, and which is superior in reliability and durability.

In order to achieve the above object, the present invention provides a steering load apparatus comprising: a steering wheel to be operated for changing a direction in which a steering-operation object is advanced; a hydraulic rotary device interlocked with operation of the steering wheel, and performing a pump function and a motor function; a hydraulic control device for adjusting a direction and force of rotation of the hydraulic rotary device; a sensor for detecting a direction and an angle of rotation of the steering wheel; and a controller for controlling the hydraulic control device based on detection result of the sensor.

With this arrangement, in an application of the steering load apparatus to a driving game system, when the steering wheel is rotationally operated responsively to a situation of a game, the controller controls the hydraulic control device in such a way that the hydraulic rotary device gives a load to the steering wheel based on the direction and angle of rotation of the steering wheel detected by the sensor, that is, that a motor function is exerted in a direction opposite to a direction in which the steering wheel has been rotationally operated. The hydraulic rotary device also performs a pump function by rotating in linkage with the rotational operation of the steering wheel. In combination of the motor function and the pump function of the hydraulic rotary device, the pressure increases, so that a load due to hydraulic pressure is applied to the rotation of the steering wheel. Therefore, when the steering wheel is rotationally operated, a load torque due to the hydraulic pressure and a load torque due to frictional resistance of the hydraulic rotary device are developed, and these loads will increase with increasing amount and speed of rotation of the steering wheel. Thus, a maneuverability close to that in actually driving a vehicle can be obtained. When the steering wheel goes out of touch during operation, the steering wheel will be rotated in a rotational direction opposite to a rotational direction in which it has been operated, by the motor function of the hydraulic rotary device. Thus, it becomes possible to reproduce a movement that, in actually driving a vehicle, the steering wheel automatically returns to a neutral position so that the vehicle returns to the straight running state. Also, since hydraulic pressure is utilized, sliding parts can be immersed in hydraulic oil, by which parts can be prevented from wearing. Thus, the system reliability and durability can be improved.

In a steering load apparatus according to an embodiment, the hydraulic control device comprises a first line and a second line respectively communicating with a forward-rotation port and a reverse-rotation port of the hydraulic rotary device, and a first control valve and a second control valve respectively provided on the first line and the second line and adjusting the direction and force of rotation of the hydraulic rotary device, and wherein said controller controls the first control valve and the second control valve based on detection result of the sensor.

Therefore, the switching operation between the first and second control valves is carried out at high speed, while the degree of openness of the first and second control valves or their set values of pressure are varied in small steps in short time, by which the direction and force of rotation of the hydraulic rotary device are adjusted quickly. Thus, for example in driving games systems, the reproduction of reaction forces derived from irregular road surfaces during the game, as well as the reproduction of a rapid change in load torque due to a collision with any obstacle can be accomplished simply and fast.

In an embodiment, the steering load apparatus further comprises a hydraulic pump for feeding oil to the first and second lines, and wherein said first control valve is a first proportional pressure reducing solenoid valve for, in a deenergized state, making a tank port, which communicates with a tank, and a pressure reducing port, which communicates with the forward-rotation port, communicated with each other, while making a pump port, which communicates with the hydraulic pump, closed, and for, in an energized state, making the pump port and the pressure reducing port communicated with each other; and said second control valve is a second proportional pressure reducing solenoid valve for, in a deenergized state, making the tank port, which communicates with the tank, and the pressure reducing port, which communicates with the reverse-rotation port, communicated with each other, while making the pump port, which communicates with the pump, closed, and for, in an energized state, making the pump port and the pressure reducing port communicated with each other.

With this arrangement, the switching operation between the first and second proportional pressure reducing solenoid valves is carried out at high speed, while the set values of pressure of the first and second proportional pressure reducing solenoid valves are varied in small steps in short time, by which the direction and force of rotation of the hydraulic rotary device are adjusted quickly. Thus, the reproduction of reaction forces derived from irregular road surfaces during the game, as well as the reproduction of a rapid change in load torque due to a collision with any obstacle can be accomplished simply and fast.

Further, when the steering load apparatus of the above constitution is used in a game machine in which an image on a display screen of a driving game system is changed by rotational operation of the steering wheel, the load applied to the steering wheel can be adjusted appropriately in response to a game screen, so that reaction forces derived from the road surface during a run on an irregular road surface in the game can be reproduced, and besides that any rapid change in load torque upon a collision with some other vehicle or obstacle can be reproduced. Thus, a driving game system having a maneuverability close to actual driving of a vehicle can be implemented.

In an embodiment, on a line that connects the hydraulic pump and the proportional pressure reducing solenoid valves with each other there is interveniently provided a check valve for blocking a flow of oil from the first and second proportional pressure reducing solenoid valves to the hydraulic pump.

With this arrangement, for example in a driving game system, in a scene in which the vehicle has come into collision by mis-handling the steering wheel during the game, in order that the steering wheel is blocked from moving because of a crash of the vehicle, either one of the first and second proportional pressure reducing solenoid valves is opened and the other closed, so that the discharge side of the hydraulic rotary device is blocked by the check valve and either one of the first and second proportional pressure reducing solenoid valves that has been closed. Thus, the oil derived from the hydraulic rotary device can be blocked from flowing to the hydraulic pump and the tank, so that the steering wheel can be locked easily.

It is preferable that a relief valve is connected between the check valve and the hydraulic pump.

With this arrangement, a maximum pressure of the hydraulic circuit can be freely set by the relief valve.

The check valve can be comprised of a first check valve for blocking a flow of oil from the first proportional pressure reducing solenoid valve to the hydraulic pump, and a second check valve for blocking a flow of oil from the second proportional pressure reducing solenoid valve to the hydraulic pump.

With this arrangement, in a scene in which the vehicle has come into collision during the game, in order that the steering wheel is blocked from moving because of a crash of the vehicle, the first and second proportional pressure reducing solenoid valves are operated respectively in such a way that the first and second lines are communicated with the hydraulic pump P. Thus, when oil is forwarded toward the hydraulic pump side by the pump function of the hydraulic rotary device connected to the steering wheel, the oil can be securely blocked by either one of the first or second check valve. As a result, the steering wheel can be locked simply.

In an embodiment, the first and second lines that connect the first and second proportional pressure reducing solenoid valves to the hydraulic rotary device are connected to a line communicating with the tank and having check valves for self-suction so as to allow oil to be resupplied from the tank to the hydraulic circuits, and to block oil from flowing out from the first and second lines to the tank.

With this arrangement, when the steering wheel is handled by a rapid rotating operation, and if the amount of oil suction from the tank port provided in the first and second proportional pressure reducing solenoid valves is insufficient, then one of the check valves is opened so as to communicate with either one lower pressure side of the first and second lines that connect the first and second proportional pressure reducing solenoid valves to the hydraulic rotary device, by which the oil in the tank can be sucked up and supplied to the lower side one of the first line or the second line. Accordingly, there can be eliminated any cavitations of the steering wheel due to lack of oil level, so that the rotational operation of the steering wheel can be accomplished smoothly.

In an embodiment, on the first and second lines that connect the first and second proportional pressure reducing solenoid valves to the hydraulic rotary device, there is interveniently provided a solenoid valve that makes the first and second lines opened or shut off.

With this arrangement, in a scene in which the vehicle has come into collision during the game, in order that the steering wheel is blocked from moving because of a crash of the vehicle, the solenoid valve is turned off so that the first and second lines are shut off, by which a block circuit is formed between the solenoid valve and the hydraulic rotary device. As a result, the pressure is rapidly increased by a rotational operation of the hydraulic rotary device until the motor torque of the hydraulic rotary device reaches a maximum. Thus, the steering lock can be accomplished simply.

In a steering load apparatus according to an embodiment, the hydraulic control device comprises a 4-port proportional solenoid valve which has a pump port communicating with a hydraulic pump, two switching ports respectively communicating with a forward-rotation port and a reverse-rotation port of the hydraulic rotary device, and a tank port communicating with a tank.

With this arrangement, the hydraulic rotary device is rotated by rotational operation of the steering wheel, and oil in one line is delivered to the other line by the pump function of the hydraulic rotary device, where the other line is fed with oil from the hydraulic pump so as to be put into a pressurized state, by which a load can be applied when the steering wheel is rotationally operated. Further, the ports of the 4-port proportional solenoid valve are each shut off, so that a block circuit is formed between the 4-port proportional solenoid valve and the hydraulic rotary device, by which the steering lock can be rendered. Also, only by providing the hydraulic circuit with one 4-port proportional solenoid valve, a steering load can be easily brought about. Furthermore, the steering lock can be executed, and the parts count can be reduced.

In a steering load apparatus according to an embodiment, a steering shaft connected to the steering wheel is connected to the hydraulic rotary device via a reduction unit.

Therefore, the steering shaft can be reduced in torque variation. Further, since the reduction unit is immersed in hydraulic oil so as to be successfully lubricated, the apparatus can be endowed with high durability, low noise, and smooth maneuverability.

In a steering load apparatus according to an embodiment, the hydraulic rotary device is provided by a swing type hydraulic rotary device.

Therefore, since the maximum rotational angle of the steering shaft is determined by the swing type hydraulic rotary device, the steering shaft does not need to be provided with a stopper. Thus, the parts count can be reduced.

In a steering load apparatus according to an embodiment, the hydraulic control device comprises a first line and a second line respectively communicating with a forward-rotation port and a reverse-rotation port of the hydraulic rotary device, and a first control valve and a second control valve respectively provided on the first and second lines and adjusting a direction and force of rotation of the hydraulic rotary device, and a first solenoid valve and a second solenoid valve which respectively are provided on the first and second lines that connect the first and second control valves to the hydraulic rotary device and which make the first and second lines opened or shut off.

Therefore, with the first and second solenoid valves shutting off the first and second lines, a block circuit is formed between the first and second solenoid valves and the hydraulic rotary device. Thus, the steering wheel can be locked easily.

### BRIEF DESCRIPTION OF THE DRAWINGS

Fig. 1 is a hydraulic circuit diagram of a steering load apparatus of a first embodiment of the present invention;
Fig. 2 is a control block diagram for controlling a hydraulic circuit of the first embodiment;
Fig. 3 is a sectional view showing main part of first and second proportional pressure reducing solenoid valves of the first embodiment;
Fig. 4 is a partly omitted hydraulic circuit diagram of a steering load apparatus of a second embodiment of the present invention;
Fig. 5 is a hydraulic circuit diagram of a steering load apparatus of a third embodiment of the present invention;
Fig. 6 is a hydraulic circuit diagram of a steering load apparatus of a fourth embodiment of the present invention;
Fig. 7 is a hydraulic circuit diagram of a steering load apparatus of a fifth embodiment of the present invention;
Fig. 8 is a hydraulic circuit diagram of a steering load apparatus of a sixth embodiment of the present invention;
Fig. 9 is a hydraulic circuit diagram of a steering load apparatus of a seventh embodiment of the present invention; and

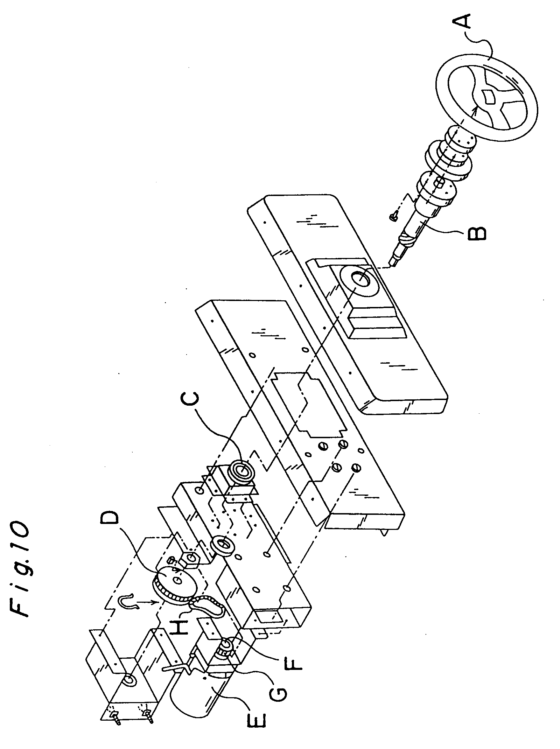

Fig. 10 is an exploded perspective view of a conventional steering load apparatus.

### BEST MODE FOR CARRYING OUT THE INVENTION

### (First Embodiment)

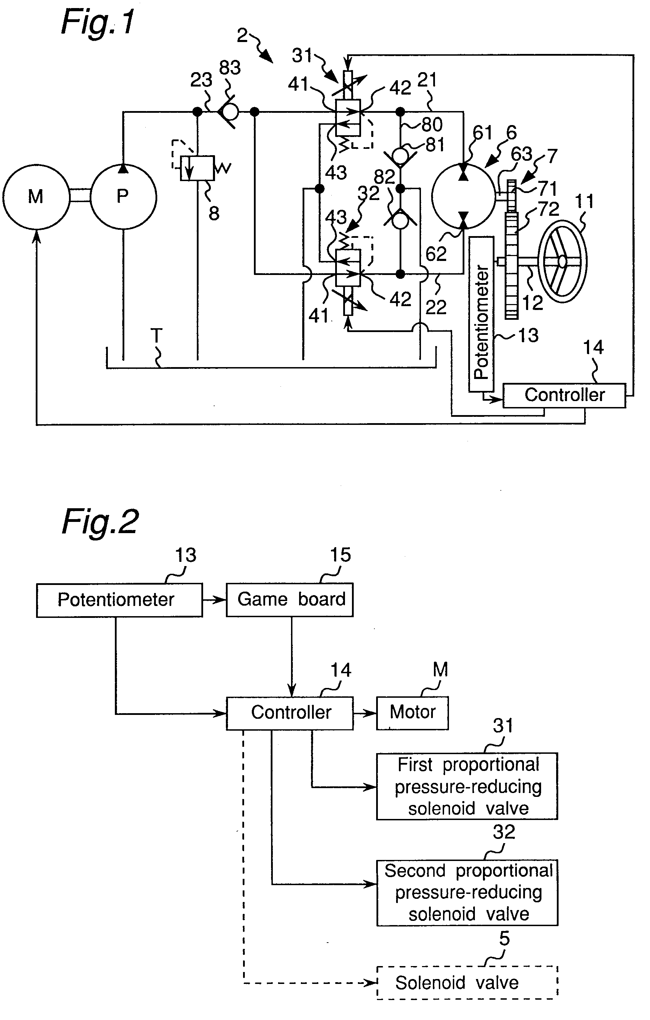

The first embodiment is described with reference to Figs. 1 to 3. The first embodiment relates to a steering load apparatus for an application in which a steering wheel 11 equipped to a driving game machine such as racing cars is rotated to simulate the driving.

Fig. 1 shows a hydraulic circuit 2 constituting the steering load apparatus of the present invention. The hydraulic circuit 2 comprises a motor M, to which a hydraulic pump P of fixed displacement type is connected. Thus, the hydraulic pump P is driven by the drive of the motor M, by which the oil in a tank T is suck up.

A check valve 83 is provided on a secondary line 23 of the hydraulic pump P so that the secondary line 23 is branched on the downstream side of the check valve 83 into two ways of first and second lines 21, 22. The first and second lines 21, 22 are communicated with two ports 61, 62 of a hydraulic rotary device 6. The first and second lines 21, 22 are provided with first and second proportional pressure reducing solenoid valves 31, 32, respectively, which will be described later.

The two ports 61, 62 communicating with the hydraulic pump P in the hydraulic rotary device 6 are so arranged that one is a forward-rotation port 61 communicating with the hydraulic pump P, and the other is a reverse-rotation port 62 communicating with the hydraulic pump P.

A steering shaft 12 to which the steering wheel 11 is integrally connected is coupled with a rotary shaft 63 of the hydraulic rotary device 6 via a reduction unit 7. When the steering wheel 11 is rotated, the rotary shaft 63 of the hydraulic rotary device 6 will rotate together.

The reduction unit 7 is composed of two gears 71, 72 with different numbers of teeth. The first gear 71 having a smaller number of teeth is fixed to the rotary shaft 63 of the hydraulic rotary device 6, while the second gear 72 having a larger number of teeth is fixed to the steering shaft 12. Thus, the number of revolutions of the steering shaft 12 is smaller than the number of revolutions of the rotary shaft 63 of the hydraulic rotary device 6.

The reduction unit 7 does not necessarily need to be provided. Instead, the steering shaft 12 may be coupled directly with the rotary shaft 63 of the hydraulic rotary device 6.

The hydraulic rotary device 6 can exert the hydraulic motor function of rotating the rotary shaft 63, by entering oil into the hydraulic rotary device 6 through either one of the forward-rotation port 61 or the reverse-rotation port 62 by the hydraulic pump P. As well as the hydraulic motor function, the hydraulic rotary device 6 can further exert a hydraulic pump function of discharging oil through either one of the forward-rotation port 61 or the reverse-rotation port 62, by rotating the rotary shaft 63 of the hydraulic rotary device 6 by external driving force via the steering wheel 11. That is, the hydraulic rotary device 6 has the same construction as a hydraulic pump or a hydraulic motor, so that it can serve as either a hydraulic pump or a hydraulic motor depending on how it is applied.

On the secondary line 23 of the hydraulic pump P, a relief valve 8 on which the maximum pressure of the hydraulic circuit 2 depends is provided between the hydraulic pump P and the check valve 83. The secondary side of the relief valve 8 is opened to the tank T. The maximum pressure of the relief valve 8 is set to, for example, 3.5 MPa.

Out of the first and second lines 21, 22 branched from the secondary line 23 of the hydraulic pump P, the first proportional pressure reducing solenoid valve 31 provided on the first line 21 on the forward-rotation side has a pump port 41 communicating with the hydraulic pump P, a pressure reducing port 42 that makes the pump port 41 communicated with the forward-rotation port 61 of the hydraulic rotary device 6 when an electric command is given, and a tank port 43 that makes the pressure reducing port 42 communicated with the tank T while no electric command is given. The second proportional pressure reducing solenoid valve 32 provided on the second line 22 of the other reverse-rotation side has a pump port 41 communicating with the hydraulic pump P, a pressure reducing port 42 that makes the pump port 41 communicated with the reverse-rotation port 62 of the hydraulic rotary device 6 when an electric command is given, and a tank port 43 that makes the pressure reducing port 42 communicated with the tank T while no electric command is given.

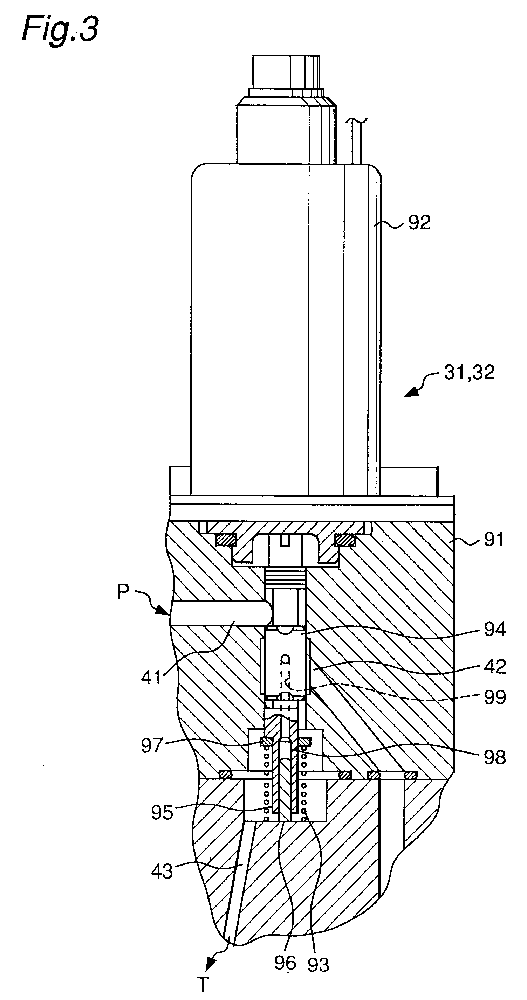

In the first proportional pressure reducing solenoid valve 31 and the second proportional pressure reducing solenoid valve 32, as shown in Fig. 3, a spool 94 is slidably provided in a casing 91, the spool 94 having an electromagnetic solenoid 92 disposed on one end side and a spring 93 disposed on the other end side. An end portion 95 of the spool 94 on which the spring is disposed is defined into a tubular form, where the spring 93 is disposed on the outer periphery of the tubular portion 95, and a pin 96 provided on the casing 91 is disposed on the inner periphery of the tubular portion so that the spool 94 is slidable with the pin 96.

The spring 93 is received by a flange portion 97 defined on the outer periphery of the spool 94. The spool 94 is urged toward the solenoid 92 side by spring force of the spring 93.

In the spool 94, a choke 99 is further defined so that its one end communicates with the pressure reducing port 42 and the other end is opened at inner part of the tubular portion 95 to a back-pressure chamber 98 defined by the tubular portion 95 and the pin 96.

Then, by making the spool 94 slide within the casing 91, either the pump port 41 and the pressure reducing port 42 are communicated with each other, or the pressure reducing port 42 and the tank port 43 are communicated with each other. The solenoid 92 is excited with an electric command to the solenoid 92 so that the spool 94 is moved toward the spring 93. This causes the pump port 41 and the pressure reducing port 42 to be communicated with each other, while it causes the pressure reducing port 42 and the tank port 43 to be shut off from each other. Thus, high-pressure oil flows into the pressure reducing port 42 side through the pump port 41.

In this operation, the oil on the pressure reducing port 42 side flows in the back-pressure chamber 98 via the choke 99 defined in the spool 94. Then, the spool 94 is moved toward the solenoid 92 so that the volume of the back-pressure chamber 98 is increased by a pressure increase in the back-pressure chamber 98. As a result, the flow passage area from the pump port 41 to the pressure reducing port 42 is adjusted so that the pressure on the pressure reducing port 42 side becomes a specified pressure in the range of 0 to 3.5 MPa depending on the situation of the game scene or the like.

When the pressure on the pressure reducing port 42 side becomes greater than a set pressure, the spool 94 is moved by its pressure increase toward the side on which the solenoid is disposed so that the back-pressure chamber 98 defined in the spool 94 may be increased in volume. As a result, the flow passage area from the pump port 41 to the pressure reducing port 42 is further decreased, by which the pressure increase on the pressure reducing port 42 side is suppressed. Otherwise, the pressure reducing port 42 is communicated with the tank port 43, by which the any excess oil is discharged to the tank T. In other words, when no electrical signal is given with the solenoid 92 unexcited, the first and second proportional pressure reducing solenoid valves 31, 32 make the tank port 43 and the pressure reducing port 42 communicated with each other, while they make the pump port 41 closed. Meanwhile, when an electrical signal is given with the solenoid 92 excited, the first and second proportional pressure reducing solenoid valves 31, 32 make the pump port 41 and the pressure reducing port 42 communicated with each other and further control the degree of openness with the pump port 41 and the pressure reducing port 42 according to the electrical signal, while they make the tank port 43 closed.

With no electrical signal given to the solenoid 92, i.e., with the solenoid 92 off, the spool 94 is pushed into the solenoid-disposed side by the urging of the spring 93 so that the pump port 41 is closed, while the pressure reducing port 42 is communicated with the tank port 43.

The first and second proportional pressure reducing solenoid valves 31, 32 are so arranged that when one of them is excited, the other is kept off, by which the oil from the hydraulic pump P is allowed to pass through only one of the two proportional pressure reducing solenoid valves.

The first and second lines 21, 22 that connect the first and second proportional pressure reducing solenoid valves 31, 32 to the hydraulic rotary device 6 are connected to each other via a line 80. On this line 80 are interveniently provided check valves 81, 82 for self-suction which communicate with the tank T so as to allow oil to be supplied from the tank T to the first and second lines 21, 22, and which block the oil from flowing out from the first and second lines 21, 22 to the tank T.

The check valve 83 provided on the secondary line 23 of the hydraulic pump P blocks oil from flowing from the first and second proportional pressure reducing solenoid valves 31, 32 to the hydraulic pump P.

Further, the second gear 72 fixed to the steering shaft 12 in the reduction unit 7 is equipped with a potentiometer 13 for detecting the angle and direction of rotation of the steering wheel 11. As shown in the control block diagram of Fig. 2, detection results of the angle and direction of rotation by the potentiometer 13 are transmitted to a controller 14 that controls the steering load apparatus. The detection results of the angle and direction of rotation by the potentiometer 13 are transmitted also to a game board 15 that performs the computation process and display process and the like for the game.

Next, the control for the steering load apparatus of the first embodiment is explained with reference to Figs. 1 and 2.

When the driving game machine starts to be operated, a signal of operation start is transmitted from the game board 15 to the controller 14. Also, by the steering wheel 11 starting to be operated with the game started, the angle and direction of rotation of the steering wheel 11 are detected by the potentiometer 13, and the detection results are transmitted to the controller 14.

Then, from the controller 14, a signal of drive start is transmitted to the motor M with the operation started, and this driving of the motor M causes the hydraulic pump P to be driven. Further transmitted from the controller 14 is a signal of exciting either one of the first proportional pressure reducing solenoid valve 31 or the second proportional pressure reducing solenoid valve 32 depending on the detection results of the potentiometer 13 and the situation of the game scene so that a specified pressure is reached. Thus, the torque applied to the steering wheel 11 is set freely, so that a feeling close to a real vehicle can be given simply.

When the steering wheel 11 is rotated, the rotary shaft 63 of the hydraulic rotary device 6 will rotate together. Therefore, the hydraulic rotary device 6 performs a hydraulic pump function. Thus, such a control operation is carried out that the second proportional pressure reducing solenoid valve 32 disposed on a line on the side of oil suction by the hydraulic pump function, for example, on the reverse-rotation side second line 22 is kept off, while the first proportional pressure reducing solenoid valve 31 disposed on the side of oil flow-out from the hydraulic rotary device 6, that is, on the forward-rotation side first line 21 is excited.

By such a control operation, when the steering wheel 11 is rotated, the oil is sucked up from the tank T via the second proportional pressure reducing solenoid valve 32 by the hydraulic rotary device 6 so that the oil is supplied to the forward-rotation side first line 21. Meanwhile, the oil derived from the hydraulic pump P is supplied from the first proportional pressure reducing solenoid valve 31 so that the pressure of the first line 21 on the forward rotation side grows higher than the set pressure. Thus, the first line 21 on the forward rotation side increases in pressure due to the pressurizing force from both sides. Accordingly, when the steering wheel 11 is rotated, both a load torque due to the oil pressure and a load torque due to frictional resistance will be applied. The increase in these load torques differs depending on the amount and speed of rotation of the steering wheel 11. As a result, even when the control of pressure of the first and second proportional pressure reducing solenoid valves 31, 32 is not executed, a maneuverability very close to that in driving a real vehicle can be felt.

During the steering operation, with the first proportional pressure reducing solenoid valve 31 excited, if the steering wheel 11 goes out of touch, oil is supplied to the forward-rotation side first line 21 in a pressurized state from the hydraulic pump P via the first proportional pressure reducing solenoid valve 31. Therefore, the hydraulic rotary device 6 exerts a hydraulic motor function with the pressurizing force derived from the hydraulic pump P, so that the steering wheel 11 is automatically rotated in a direction reverse to the direction in which it is rotationally operated. This makes it possible to reproduce the motion that the steering wheel attempts to return to the neutral position so as to return to the straight running state as would be done in actually driving a vehicle.

Further, in a scene where the vehicle runs on an irregular road surface during the game, commands for switching between the first and second proportional pressure reducing solenoid valves 31, 32 and changing the set value of pressure in small steps in short time are sent from the controller 14 to the first and second proportional pressure reducing solenoid valves 31, 32 in order to reproduce the reaction force derived from the road surface. Thus, by operating the first and second proportional pressure reducing solenoid valves 31, 32 according to the commands, vibrations due to the rattling of the steering wheel 11 can be easily reproduced.

Besides, on the line 80 by which the first and second lines 21, 22 that connect the first and second proportional pressure reducing solenoid valves 31, 32 to the hydraulic rotary device 6 are connected to each other, there are provided check valves 81, 82 for self-suction which communicate with the tank T so as to allow oil to be supplied to the first and second lines 21, 22 from the tank T, and which block the oil from flowing out from the first and second lines 21, 22 to the tank T. Therefore, when the steering wheel 11 is handled by a rapid rotating operation, and if the amount of oil suction from the tank port 43 provided in the first and second proportional pressure reducing solenoid valves 31, 32 is insufficient, then one of the check valves 81, 82 is opened so as to communicate with either one lower pressure side of the first and second lines 21, 22, by which the oil in the tank T can be sucked up and supplied to the lower side one of the first line 21 and the second line 22. Accordingly, there can be eliminated any lack of oil in the first line 21 or the second line 22, so that the rotational operation of the steering wheel 11 can be accomplished smoothly without cavitation.

Also in a scene in which the vehicle has come into collision by mis-handling the steering wheel 11 during the game, it is preferable that the steering wheel 11 is blocked from moving because of a crash of the vehicle. For this purpose, the steering load apparatus operates as follows.

Now assume that, with the controller 14 thrown into a steering-locked mode by a signal derived from the game board 15, the steering wheel 11 has been attempted, for example, to be handled toward the direction in which oil will be discharged through the forward-rotation port 61 of the hydraulic rotary device 6. Then, the controller 14, receiving from the potentiometer 13 a signal representing the direction of rotation of the steering wheel 11, transmits to the first proportional pressure reducing solenoid valve 31 an electrical signal of exciting its solenoid 92, while it gives no electrical signal to the second proportional pressure reducing solenoid valve 32 so that its solenoid 92 is unexcited. As a result, the first proportional pressure reducing solenoid valve 31 makes the pump port 41 and the pressure reducing port 42 communicated with each other, while it makes the tank port 43 closed. The second proportional pressure reducing solenoid valve 32 makes the tank port 43 and the pressure reducing port 42 communicated with each other, while it makes the pump port 41 closed. Accordingly, the hydraulic rotary device 6 sucks up the oil in the tank T to the reverse-rotation port 62 through both the line running via the tank port 43 and pressure reducing port 42 of the second proportional pressure reducing solenoid valve 32 and the line passing via the check valve 82 for self-suction, so that the hydraulic rotary device 6 attempts to discharge the oil through the forward-rotation port 61. However, since the first line 21 communicating with the forward-rotation port 61 is closed by the check valves 83, 81 and the closed pump port 41 of the second proportional pressure reducing solenoid valve 32, the hydraulic rotary device 6 substantially cannot discharge oil through the forward-rotation port 61. That is, the hydraulic rotary device 6 is locked, with the result of a steering lock.

Also when the steering wheel 11 is attempted to be rotated in the reverse direction, a steering lock is similarly executed.

Further, even after such a steering lock is executed, the motor M is kept being driven. Therefore, the steering wheel 11 can be automatically returned to the neutral position via the hydraulic rotary device 6 under the control of the controller 14 based on the output of the potentiometer 13.

As described above, in the first embodiment, the steering load apparatus for giving a load in steering operation comprises: the hydraulic pump P which is driven by the electric motor M and which sucks up oil in the tank T; the hydraulic rotary device 6 to which the steering shaft 12 having the steering wheel 11 is connected, and which has the forward-rotation port 61 and reverse-rotation port 62 communicating with the hydraulic pump P, and which performs a hydraulic motor function by pressurizing force derived from the hydraulic pump P, or performs a hydraulic pump function by external driving force derived from the steering wheel 11 thereby to generate hydraulic pressure; and the first proportional pressure reducing solenoid valve 31 and the second proportional pressure reducing solenoid valve 32. Therefore, by freely setting the pressures of the first and second proportional pressure reducing solenoid valves 31, 32 according to the situation of the game, the load can be freely set during the rotational operation of the steering wheel 11. Further, independently of the set pressures of the first and second proportional pressure reducing solenoid valves 31, 32, the pressure increases with increasing rotational angular velocity of the steering wheel 11 during its rotational operation, and yet the frictional resistance of the hydraulic rotary device 6 also increases. Accordingly, the larger load torque is given as the rotational angular velocity increases. Also, as the rotational angular velocity decreases, the pressure decreases while the frictional resistance of the hydraulic rotary device 6 also decreases, with the result that the load torque is reduced. Thus, a maneuverability close to that in actually driving a vehicle can be easily obtained.

Conventionally, the rotational direction of the motor would be switched over depending on the forward or reverse rotation of the steering wheel 11, or depending on the situation of the game screen. In contrast, the motor M of the present invention is used only for driving the hydraulic pump P, so that it can be kept rotating with constant torque always in a constant direction without repetitive starts and stops, irrespectively of the rotational angular velocity and rotational direction of the steering wheel 11. Thus, the reliability and durability of the motor M can be improved.

Use of the hydraulic pressure makes allows almost all components to be immersed in hydraulic oil so that the sliding components can be improved in lubrication. As a result, the reliability and durability as a whole of the system can be improved.

The switching between forward and reverse rotation of the steering wheel 11 or the switching of the steering load depending on the situation of the game screen can be accomplished only by switching the excitation of the first and second proportional pressure reducing solenoid valves 31, 32. Therefore, the switching of the direction of the load torque, the reproduction of the reaction force derived from the road surface during the running on an irregular road surface in the game, and the reproduction of a rapid load change at a collision against other vehicles or obstacles can be accomplished simply and fast.

In the game, at scenes, for example, in which the vehicle runs outside the road, torque variations of the steering wheel 11 due to variations in the force transferred from the road surface can be easily reproduced by switching the first and second proportional pressure reducing solenoid valves 31, 32.

Further in the first embodiment, the line 80 is connected to the first and second lines 21, 22 that connect the proportional pressure reducing solenoid valves 31, 32 to the hydraulic rotary device 6, the line 80 having the check valves 81, 82 for self-suction which communicate with the tank T so as to allow oil to be replenished from the tank T to the first and second lines 21, 22, and which prevent oil from flowing out from the first and second lines 21, 22 to the tank T. Therefore, when the steering wheel 11 is handled by a rapid rotating operation, and if the amount of oil suction on the side of the tank port 43 provided in the first and second proportional pressure reducing solenoid valves 31, 32 is insufficient, then the oil in the tank T can be sucked up through the check valves 81, 82 and supplied to the first line 21 or the second line 22. Accordingly, there can be eliminated any cavitations influencing the steering wheel 11 without causing any lack of oil in the first line 21 or the second line 22, so that the rotational operation of the steering wheel 11 can be accomplished smoothly.

Also in the above first embodiment, the check valve 83 for preventing the oil from flowing from the first and second proportional pressure reducing solenoid valves 31, 32 to the hydraulic pump P are interveniently provided on the line 23 that connects the hydraulic pump P to the first and second proportional pressure reducing solenoid valves 31, 32 and on a side of the line 23 closer to the first and second proportional pressure reducing solenoid valves 31, 32 than the relief valve 8. Therefore, in a scene in which the vehicle has come into collision by mishandling the steering wheel 11 during the game, either one of the first or second proportional pressure reducing solenoid valve 31, 32 is opened by a command from the controller 14, while the other is closed, so that the hydraulic rotary device 6 connected to the steering wheel 11 is blocked on its discharge side by the check valve 83 and the either one of the first and second proportional pressure reducing solenoid valves 31, 32. As a result, the hydraulic rotary device 6 is locked, that is, the steering wheel 11 is steering-locked simply.

Since the steering shaft 12 is connected to the hydraulic rotary device 6 via the reduction unit 7, the steering shaft 12 can be reduced in torque variation. Further, since the reduction unit 7 is immersed in oil, with hydraulic oil, so as to be successfully lubricated, the apparatus can be endowed with high durability, low noise, and smooth maneuverability.

Instead of using the reduction unit 7, if the steering shaft 12 is connected directly to the hydraulic rotary device 6, there can be eliminated rattlings and plays as would be involved with the use of the reduction unit 7. However, rattlings or the like may be freely set by hydraulic circuit or the like, as required.

Preferably, the steering shaft 12 is provided with a stopper that will prohibit the steering shaft 12 from rotating over 360°.

In the first embodiment, it has been arranged that steering lock is enabled by the check valve 83. However, without using the check valve 83, the lock may be implemented by stopping the motor M. Otherwise, with the hydraulic pump P given by a variable displacement pump, the discharge rate of oil from the pump is nullified by, for example, neutralizing the pump, while the proportional pressure reducing solenoid valve on the excitation side is opened between its pump port and pressure reducing port and, besides, the proportional pressure reducing solenoid valve to be turned off is closed at its pump port, of which the pressure reducing port is communicated with the tank so that the hydraulic circuit connecting the hydraulic pump and the hydraulic rotary device is put into a block circuit, with the result of a steering block.

### (Second Embodiment)

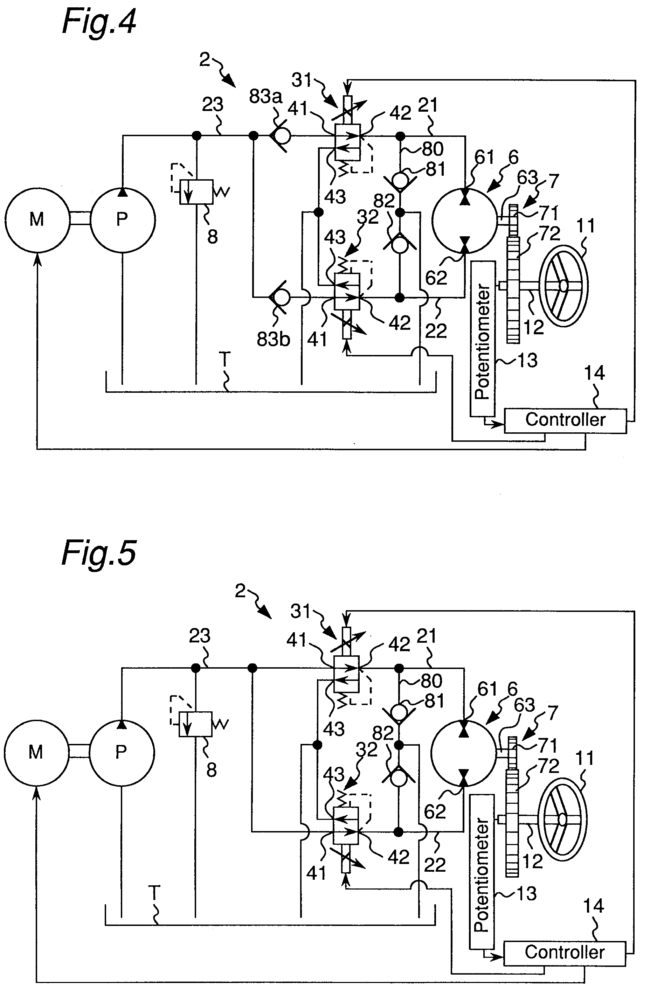

A second embodiment is described with reference to Fig. 4. Hereinbelow, components identical to those shown in Fig. 1 will be designated by like reference numerals and omitted in description, and only different components will be described. In this second embodiment, instead of the check valve 83 used in the first embodiment, a first check valve 83a for blocking oil from flowing from the first proportional pressure reducing solenoid valve 31 to the hydraulic pump P, and a second check valve 83b for blocking oil from flowing from the second proportional pressure reducing solenoid valve 32 to the hydraulic pump P, are provided downstream of the pump P and upstream of the first and second proportional pressure reducing solenoid valves 31, 32.

According to the second embodiment as shown above, in a scene in which the vehicle has come into collision by mis-handling the steering wheel 11 during the game, in order that the steering wheel 11 is blocked from moving because of a crash of the vehicle, both the first and second proportional pressure reducing solenoid valves 31, 32 are operated so as to communicate with the hydraulic pump P. When an oil flow by the pump function of the hydraulic rotary device 6 connected to the steering wheel 11 is forwarded toward the hydraulic pump P, the oil can be securely blocked by either one of the check valves 83a, 83b, so that the hydraulic rotary device 6 can be locked. Thus, the steering lock can be executed simply.

Yet, in this operation, it is unnecessary to selectively operate only either one of the first and second proportional pressure reducing solenoid valves 31, 32 with a command from the controller 14, as is necessary in the first embodiment. By operating both the first and second proportional pressure reducing solenoid valves 31, 32 together, the steering lock as described above can be executed securely.

### (Third Embodiment)

Fig. 5 shows a third embodiment. In this third embodiment, without using one check valve 83 in the first embodiment and two check valves 83a, 83b in the second embodiment, the first line 21 and the second line 22 that connect the first and second proportional pressure reducing solenoid valves 31, 32 to the hydraulic rotary device 6 are connected to each other by a line 80, and check valves 81, 82 for self-suction are interveniently provided on the line 80.

Even with the above arrangement of only providing the line 80, when the steering wheel 11 is handled by a rapid rotating operation, and if the amount of oil suction from the tank port 43 provided in the first and second proportional pressure reducing solenoid valves 31, 32 is insufficient, then one of the check valves 81, 82 for self-suction is opened so as to communicate with either one lower pressure side of the first line 21 and the second line 22, by which the oil in the tank T can be sucked up and supplied to the lower side one of the first line 21 and the second line 22. Accordingly, there can be eliminated any cavitations of the steering wheel 11 so that the rotational operation of the steering wheel 11 can be accomplished smoothly.

### (Fourth Embodiment)

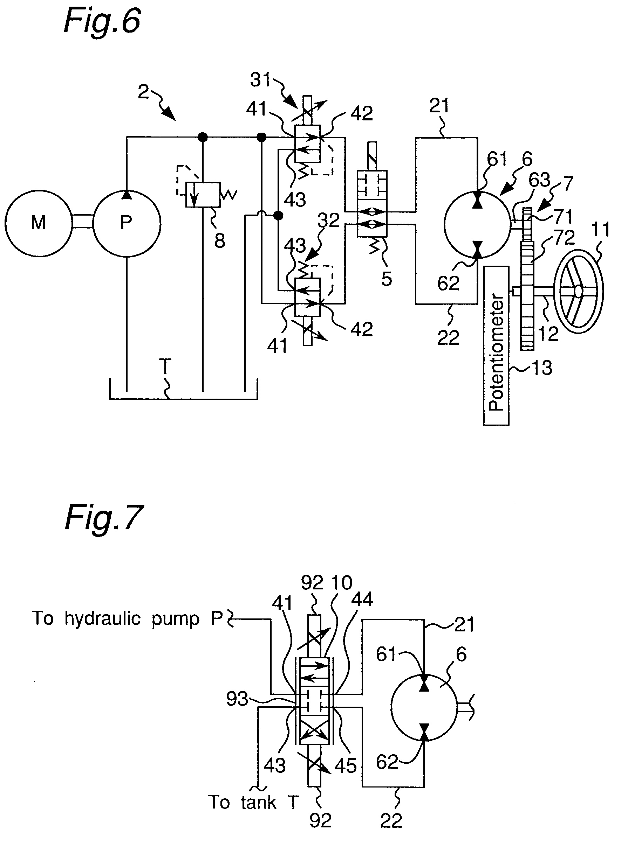

Fig. 6 shows a fourth embodiment. In this fourth embodiment, on the first and second lines 21, 22 that connect the first and second proportional pressure reducing solenoid valves 31, 32 to the hydraulic rotary device 6, there is interveniently provided a solenoid valve 5 that makes the first and second lines 21, 22 opened or shut off. This solenoid valve 5 is connected to the controller 14 as shown by a broken line in the control block diagram of Fig. 2. Normally, the solenoid valve 5 is kept in communicating state by a command from the controller 14. During the game, when the need of a steering lock has arisen, for example, when a scene of accidental collision has come about, the solenoid valve 5 is shut off with a command from the controller 14.

In the fourth embodiment as shown above, like the foregoing first embodiment, in a scene in which the vehicle has come into collision during the game, since the solenoid valve 5 is interveniently provided on the first and second lines 21, 22 that connect the first and second proportional pressure reducing solenoid valves 31, 32 to the hydraulic rotary device 6, the solenoid valve 5 is turned off into a shut-off state by a command from the controller 14 so that a block circuit is formed between the solenoid valve 5 and the hydraulic rotary device 6. As a result, the pressure is rapidly increased by a rotational operation of the hydraulic rotary device 6 until the motor torque of the hydraulic rotary device 6 reaches a maximum. Thus, the steering lock can be executed.

### (Fifth Embodiment)

A fifth embodiment is described with reference to Fig. 7. In this fifth embodiment, instead of the first and second proportional pressure reducing solenoid valves 31, 32 and the solenoid valve 5 used in the foregoing embodiments, there is provided a 4-port proportional solenoid valve 10 which has a pump port 41 communicating with the hydraulic pump P, two switching ports 44, 45 respectively communicating with the forward-rotation port 61 and the reverse-rotation port 62 of the hydraulic rotary device 6, and a tank port 43 communicating with the tank T, as shown in Fig. 7.

This 4-port proportional solenoid valve 10 has two solenoids 92, 92 provided at both ends of a spool 93. Either one of the solenoids 92, 92 is excited depending on the rotational direction of the steering wheel 11, so that the pump port 41 communicating with the hydraulic pump P is communicated with either one of the switching port 44 or 45 that communicates with the forward-rotation port 61 or the reverse-rotation port 62 of the hydraulic rotary device 6, while the other switching port 45 or 44 is communicated with the tank port 43. In this way, only by providing one 4-port proportional solenoid valve 10, it is made possible that, as in the first embodiment, the hydraulic rotary device 6 is rotated by rotational operation of the steering wheel 11, and oil sucked up from the tank T via one line by this rotation is delivered to the other line, where the other line is fed with oil from the hydraulic pump P so as to be put into a pressurized state, by which a load can be applied when the steering wheel 11 is rotationally operated.

Further in the fifth embodiment, the ports 41, 43, 44, 45 of the 4-port proportional solenoid valve 10 are each shut off, so that a block circuit is formed between the 4-port proportional solenoid valve 10 and the hydraulic rotary device 6, by which the steering lock can be rendered.

As shown above, in the fifth embodiment, only by providing the hydraulic circuit 2 with one 4-port proportional solenoid valve 10, a steering load can be easily brought about as in the foregoing embodiments. Furthermore, while the steering lock is implemented, the parts count can be reduced.

### (Sixth Embodiment)

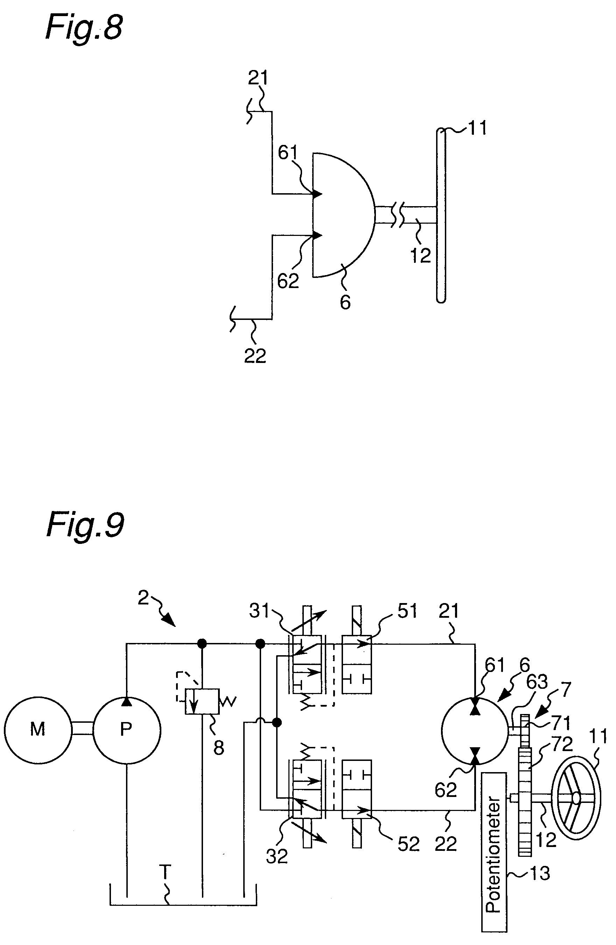

In the foregoing embodiments, the hydraulic rotary device 6 has been designed rotatable to 360 degrees. However, as in a sixth embodiment shown in Fig. 8, it may be provided as a swing type hydraulic rotary device 6 that swings within a specified angular range.

With such an arrangement, since the maximum rotational angle of the steering shaft 12 can be determined by the swing type hydraulic rotary device 6, the steering shaft 12 does not need to be provided with a stopper. Thus, the parts count can be reduced.

### (Seventh Embodiment)

In the fifth embodiment, the solenoid valve 5 has been provided by one 4-port solenoid valve. Alternatively, as in a seventh embodiment shown in Fig. 9, first and second solenoid valves 51, 52 in correspondence to the first and second proportional pressure reducing solenoid valves 31, 32 may be used.

### INDUSTRIAL APPLICABILITY

The steering load apparatus of the present invention can be applied as steering load apparatus in game machines as well as simulation machines for the training of driving.

## Claims

1. A steering load apparatus comprising:
a steering wheel (11) to be operated for changing a direction in which a steering-operation object is advanced;
a hydraulic rotary device (6) interlocked with operation of the steering wheel (11), and performing a pump function and a motor function;
a hydraulic control device for adjusting a direction and force of rotation of the hydraulic rotary device (6);
a sensor (13) for detecting a direction and an angle of rotation of the steering wheel (11); and
a controller (14) for controlling the hydraulic control device based on detection result of the sensor (13).

2. The steering load apparatus as claimed in Claim 1, wherein the hydraulic control device comprises a first line (21) and a second line (22) respectively communicating with a forward-rotation port (61) and a reverse-rotation port (62) of the hydraulic rotary device (6), and a first control valve (31) and a second control valve (32) respectively provided on the first line (21) and the second line (22) and adjusting the direction and force of rotation of the hydraulic rotary device (6), and wherein said controller (14) controls the first control valve (31) and the second control valve (32) based on detection result of the sensor (13).

3. The steering load apparatus as claimed in Claim 2, further comprising a hydraulic pump (P) for feeding oil to the first and second lines (21, 22), and wherein
said first control valve (31) is a first proportional pressure reducing solenoid valve for, in a deenergized state, making a tank port (43), which communicates with a tank (T), and a pressure reducing port (42), which communicates with the forward-rotation port (61), communicated with each other, while making a pump port (41), which communicates with the hydraulic pump (P), closed, and for, in an energized state, making the pump port (41) and the pressure reducing port (42) communicated with each other; and
said second control valve (32) is a second proportional pressure reducing solenoid valve for, in a deenergized state, making the tank port (43), which communicates with the tank (T), and the pressure reducing port (42), which communicates with the reverse-rotation port (62), communicated with each other, while making the pump port (41), which communicates with the pump (P), closed, and for, in an energized state, making the pump port (41) and the pressure reducing port (42) communicated with each other.

4. The steering load apparatus as claimed in Claim 3, wherein the steering load apparatus is a steering load apparatus for use in a game machine in which an image on a display screen of a driving game system is changed by rotational operation of the steering wheel (11).

5. The steering load apparatus as claimed in Claim 3, wherein on a line (23) that connects the hydraulic pump (P) and the proportional pressure reducing solenoid valves (31, 32) with each other there is interveniently provided a check valve (83) for blocking a flow of oil from the first and second proportional pressure reducing solenoid valves (31, 32) to the hydraulic pump (P).

6. The steering load apparatus as claimed in Claim 5, wherein a relief valve (8) is connected between the check valve (83) and the hydraulic pump (P).

7. The steering load apparatus as claimed in Claim 5, wherein said check valve (83) is comprised of a first check valve (83a) for blocking a flow of oil from the first proportional pressure reducing solenoid valve (31) to the hydraulic pump (P), and a second check valve (83b) for blocking a flow of oil from the second proportional pressure reducing solenoid valve (32) to the hydraulic pump (P).

8. The steering load apparatus as claimed in Claim 3, wherein said first and second lines (21, 22) that connect the first and second proportional pressure reducing solenoid valves (31, 32) to the hydraulic rotary device (6) are connected to a line (80) communicating with the tank (T) and having check valves (81, 82) for self-suction so as to allow oil to be resupplied from the tank (T) to the first and second lines (21, 22), and to block oil from flowing out from the first and second lines (21, 22) to the tank (T).

9. The steering load apparatus as claimed in Claim 3, wherein on said first and second lines (21, 22) that connect the first and second proportional pressure reducing solenoid valves (31, 32) to the hydraulic rotary device (6), there is interveniently provided a solenoid valve (5) that makes the first and second lines (21, 22) opened or shut off.

10. The steering load apparatus as claimed in Claim 1, wherein said hydraulic control device comprises a 4-port proportional solenoid valve (10) which has a pump port (41) communicating with a hydraulic pump (P), two switching ports (44, 45) respectively communicating with a forward-rotation port (61) and a reverse-rotation port (62) of the hydraulic rotary device (6), and a tank port (43) communicating with a tank (T).

11. The steering load apparatus as claimed in Claim 1, wherein a steering shaft (12) connected to the steering wheel (11) is connected to the hydraulic rotary device (6) via a reduction unit (7).

12. The steering load apparatus as claimed in Claim 1, wherein said hydraulic rotary device (6) is provided by a swing type hydraulic rotary device (6).

13. The steering load apparatus as claimed in Claim 2, wherein said hydraulic control device has a first solenoid valve (51) and a second solenoid valve (52) which are provided on the first and second lines (21, 22), respectively, that connect the first and second control valves (31, 32) to the hydraulic rotary device (6), and which make the first and second lines (21, 22) opened or shut off, respectively.
